# EUROPÄISCHE PATENTSCHRIFT

(11) **EP 0 871 248 B1**
(45) Veröffentlichungstag und Bekanntmachung des Hinweises auf die Patenterteilung: **17.10.2001**
(21) Anmeldenummer: 98104653.5
(22) Anmeldetag: 14.03.1998
(51) Int. Cl.: H01R 9/24, H02B 1/20

(54) **Haltevorrichtung für Sammelschienen von Schirmanschlüssen**
Support device for shielded cable bus bars
Dispositif de fixation des barres omnibus pour la connexion des câbles blindés

(30) Priorität: 10.04.1997 DE 19714879
(43) Veröffentlichungstag der Anmeldung: 14.10.1998
(73) Patentinhaber: Weidmüller Interface GmbH & Co., 32760 Detmold (DE)
(72) Erfinder: Hansmann, Karl Anton, 32839 Steinheim (DE); Möller, Ulrich, 42756 Detmold (DE); Wilmes, Manfred, 32760 Detmold (DE)
(74) Vertreter: Loesenbeck, Karl-Otto, Dipl.-Ing.

(56) Entgegenhaltungen:
- DE-A- 19 610 854
- DE-U- 9 410 214
- FR-A- 2 438 359
- GB-A- 2 198 886

## Beschreibung

Die vorliegende Erfindung betrifft eine Haltevorrichtung für Sammelschienen von Schirmanschlüssen gemäß Gattungsbegriff des Anspruches 1 In einer älteren Anmeldung (DE 196 10 854) beinhaltet die Haltevorrichtung zu beiden Seiten der Reihenklemmenanreihung auf die Tragschiene aufsetzbare Grundkörper, in die sich von der Reihenklemmenanreihung fort erstreckende Halter in Form von Tragstangen eingesteckt sind, die an ihren Enden Halteeinrichtungen tragen, in denen die Sammelschiene festgelegt ist. Die Tragstangen sind mit Rasten versehen und in Rastaufnahmen des Grundkörpers unterschiedlich weit und damit lageveränderbar bezüglich des Abstandes der Sammelschiene zur Reihenklemmenanreihung einzustecken. Die Halteeinrichtungen für die Sammelschiene weisen zwei unterschiedliche Aufnahmen für die Sammelschiene auf derart, daß diese darin in zwei unterschiedlichen Höhenlagen im Verhältnis zur Reihenklemmenanreihung angeordnet werden kann. Die Haltevorrichtung hat einen relativ komplizierten Aufbau, benötigt in jedem Anwendungsfall spezielle, auf die Tragschiene aufzusetzende Grundkörper und ist in ihren Möglichkeiten der Höhenveränderung der Sammelschiene im Verhältnis zur Reihenklemmenanreihung begrenzt.

Es ist ferner bekannt, für jeden Anwendungsfall bei unterschiedlichen Leitergrößen und in Anpassung an eine optimale räumliche Ausrichtung zu der Reihenklemmenanreihung jeweils angepaßte Halter einzusetzen (DE-PS 10 60 011), was den Einsatz vieler unterschiedlicher Haltevorrichtungen erfordert.

Die FR-A-2 438 359 zeigt eine Haltevorrichtung für Sammelschienen, die in ihrem Abstand zu einer Reihenklemmenanreihung veränderbar gehalten ist.

Der vorliegenden Erfindung liegt die Aufgabe zugrunde, eine Haltevorrichtung der gattungsgemäßen Art so zu gestalten, daß ihre Verwendungsfähigkeit verbessert und sie kostengünstiger herstellbar ist.

Die erfindungsgemäße Lösung ergibt sich aus den Merkmalen des Anspruches 1. Mit einer Haltevorrichtung für sehr zahlreiche Anwendungsfälle, die für sich genommen einen einfachen kostruktiven Aufbau hat, kann die Sammelschiene für den jeweiligen Anwendungsfall exakt in dem gewünschten Abstand und in der gewünschten Höhenlage zur Reihenklemmenanordnung angeordnet werden. Sind dabei die Halter auf einer Installationsplatte befestigt, entfällt die Anordnung zusätzlicher Teile auf der Tragschiene. Fehlt eine Installationsplatte, werden auf der Tragschiene zwei in ihrem konstruktiven Aufbau einfache Tragleisten angeordnet.

In zweckmäßiger Ausgestaltung sind in der Installationsplatte oder in den Tragleisten Langlöcher vorgesehen, die quer zur Längsachsenrichtung der Tragschiene verlaufen, so daß die aus der Tragschienenebene emporstehenden Halter parallel zu sich selbst zur Einstellung des Abstandes von der Reihenklemmenanordnung verlagert und in der gewünschten Position mittels Schrauben, die die Langlöcher durchtreten, festgesetzt werden können.

Ebenso können die höhenverschieblich auf den Haltern angeordneten Klemmeinrichtungen für die Sammelschiene in zweckmäßiger Ausgestaltung mittels Klemmschrauben in der gewünschten Höhenlage auf den Haltern festgesetzt werden. Die Klemmschrauben können in weiterer zweckmäßiger Ausgestaltung dazu benutzt werden, auch die Sammelschiene darin festzusetzen.

Anstelle einer Klemmschraube können auch andere Befestigungsmittel, beispielsweise Rastelemente, die in in den Haltern vorgesehene Rastöffnungen eingreifen, benutzt werden. Zwar ist dann eine stufenlose Verstellung nicht gegeben, durch das vorgegebene Rastermaß ergibt sich jedoch immer eine exakte Ausbildung der Sammelschiene.

Weitere bevorzugte Ausgestaltungen des Erfindungsgegenstandes sind in den Unteransprüchen gekennzeichnet.

Ausführungsbeispiele des Erfindungsgegenstandes werden nachfolgend anhand der beigefügten Zeichnung beschrieben.

Es zeigen:

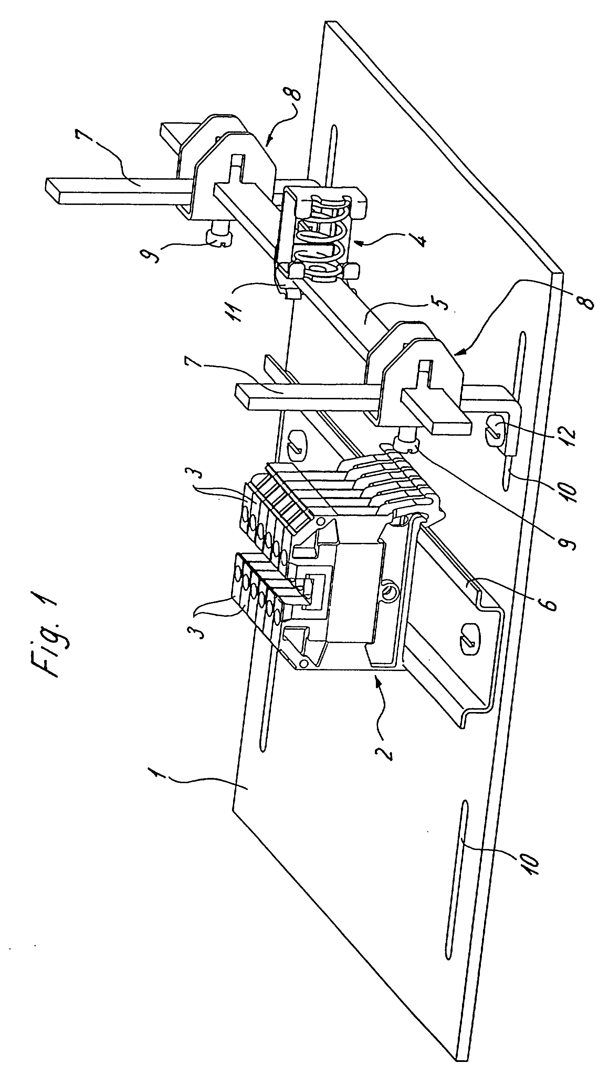

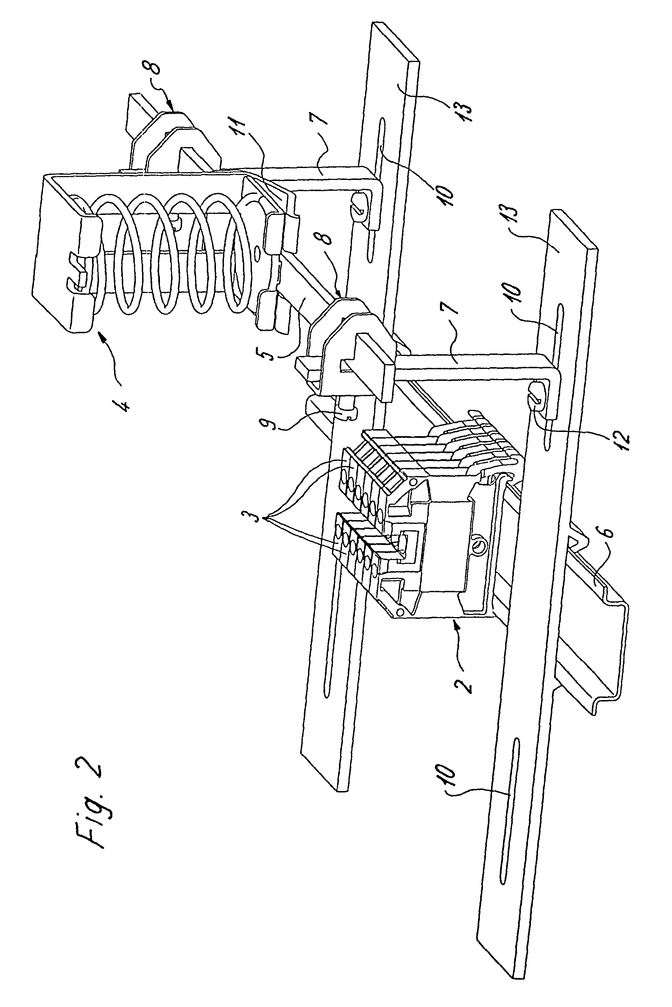

- Figur 1 und 2: jeweils ein Ausführungsbeispiel einer erfindungsgemäßen Vorrichtung in perspektivischer Darstellung.

In der Fig. 1 ist eine Vorrichtung gezeigt, die eine Installationsplatte 1 aufweist, auf der eine Tragschiene 6 befestigt ist.

Auf dieser Tragschiene 6 ist ein Klemmblock 2, bestehend aus einer Vielzahl miteinander verbundener Reihenklemmen 3 angeordnet.

In den sich gegenüberliegenden, quer zur Tragschiene 6 verlaufenden Randbereichen der Installationsplatte 1 sind jeweils zwei, parallel zur Kante verlaufende Langlöcher 10 angeordnet.

Mittels Schrauben 12 sind winkelörmige Halter 7 im Bereich von zwei sich gegenüberliegenden Langlöchern 10 befestigt, auf denen jeweils eine Halteeinrichtung 8 angeordnet ist, in der eine Sammelschiene 5 so festgelegbar ist, daß sie parallel zur Tragschiene 6 verläuft und praktisch eine Brücke bildet.

Jede Halteeinrichtung 8 ist so ausgebildet, daß sie auf dem Halter 7 von oben nach unten bewegbar ist. In der jeweils gewünschten Position kann sie dann mittels einer Klemmschraube 9 an dem Halter 7 festgesetzt werden.

Weiter ist die Sammelschiene 5 in der Halteeinrichtung 8, die in Draufsicht U-förmig ausgebildet ist, hin und her verschoben und durch die Schraube 9 gleichfalls in einer Endposition fixiert werden.

Auf der Sammelschiene 5 ist eine Klemmeinrichtung 4 befestigt, die eine federbelastete Aufnahme 11 aufweist, in der ein elektrischer Leiter oder eine Schirmleitung festklemmbar ist.

In der Fig. 2 ist ein weiteren Ausführungsbeispiel der Erfindung gezeigt, bei dem die Halter 7 nicht auf einer Installationsplatte 1, sondern auf zwei parallel und mit Abstand zueinander verlaufenden Tragleisten 13 befestigt sind.

Ebenso wie die Installationsplatte 1 weisen die Tragleisten 13 Langlöcher 10 auf, durch die mit den Haltern verbundene Schrauben 12 geführt sind, mit denen die Halter in der jeweiligen, durch die Stellung im Langloch 10 gegebenen Position festsetzbar sind.

Die Tragleisten 13 sind ebenso wie der Klemmblock 2 mit der Tragschiene 6 verrastet.

Während bei dem Ausführungsbeispiel nach der Fig. 1 die Sammelschiene so angeordnet ist, daß die Aufnahme 11 parallel zu den Haltern 7 verläuft, ist sie bei dem in der Fig. 2 gezeigten Beispiel dazu um 90° geschwenkt, so daß die Aufnahme 11 dieser Klemmeinrichtung 4 quer zum senkrechten Schenkel der Halter 7 verläuft bzw. parallel zu den Tragleisten 13.

Beide Ausführungsbeispiele erlauben jedoch die Klemmeinrichtung 4 in drei Ebenen gegenüber dem Klemmblock 2 zu verstellen, wodurch eine sich an den Bedürfnissen angepaßte Positionierung der Klemmeinrichtung möglich ist.

### Bezugszeichenliste

- 1: Installationsplatte
- 2: Klemmenblock
- 3: Reihenklemme
- 4: Klemmeinrichtung
- 5: Sammelschiene
- 6: Tragschiene
- 7: Halter
- 8: Halteeinrichtung
- 9: Klemmschraube
- 10: Langloch
- 11: Aufnahme
- 12: Schraube
- 13: Tragleiste

## Patentansprüche

1. Haltevorrichtung für Sammelschienen von Schirmanschlüssen, mit auf der Sammelschiene (5) angeordneten Klemmeinrichtungen (4), die einer auf einer Tragschiene (6) angeordneten Reihenklemmenanreihung (3) zugeordnet ist, wobei die Sammelschiene (5) und damit die darauf befestigten Klemmeinrichtungen (4) in der Haltevorrichtung sowohl in ihrem Abstand wie in ihrer Höhenlage zu der Reihenklemmenanreihung (3) veränderbar gehalten ist, **dadurch gekennzeichnet, daß** die Haltevorrichtung aus der Ebene der Tragschiene (6) emporstehende Halter (7) aufweist, die auf einer Installationsplatte (1) oder einer Tragleiste (13) in ihrem Abstand zur Reihenklammenanreihung (3) veränderbar befestigt sind und auf denen Halteeinrichtungen (8) höhenverschieblich befestigt sind, in denen die Sammelschiene (5) gehalten ist.

2. Haltevorrichtung nach Anspruch 1, **dadurch gekennzeichnet, daß** auch die Tragschiene (6) auf der Installationsplatte (1) befestigt ist.

3. Haltevorrichtung nach Anspruch 1, **dadurch gekennzeichnet, daß** in der Installationsplatte (1) quer zur Tragschiene (6) verlaufende Langlöcher (10) vorgesehen sind, in denen die Halter (7) mittels Schrauben (12) befestigt sind.

4. Haltevorrichtung nach Anspruch 1, **dadurch gekennzeichnet, daß** die Tragleisten (13) form- und/oder kraftschlüssig mit der Tragschiene (6) verbunden sind.

5. Haltevorrichtung nach Anspruch 1, **dadurch gekennzeichnet, daß** die quer zur Längsachse der Tragschiene (6) angeordneten Tragleisten (13) sich in ihrer Längsachsenrichtung erstreckende Langlöcher (10) aufweisen, wobei in zwei Langlöchern der sich gegenüberliegenden Tragleisten (13) die Halter (7) durch Schrauben (12) gehalten sind.

6. Haltevorrichtung nach Anspruch 1, **dadurch gekennzeichnet, daß** die Halteeinrichtungen (8) durch Klemmschrauben (9) an den Haltern (7) festlegbar sind.

7. Haltevorrichtung nach Anspruch 6, **dadurch gekennzeichnet, daß** die Sammelschiene (5) durch die Klemmschrauben (9) in den Halteeinrichtungen (8) festsetzbar ist.

8. Haltevorrichtung nach Anspruch 1, **dadurch gekennzeichnet, daß** die Halter (7) Rastöffnungen aufweisen, in die Rastzapfen der Halteeinrichtungen (8) einrastbar sind.

## Claims

1. Holding device for busbars of shielded terminals, with clamping devices (4) which are arranged on the busbar (5) and with which a row of terminal blocks (3) arranged on a support rail (6) is associated, wherein the busbar (5) and thus the clamping devices (4) fastened thereon are held in the holding device to be variable not only in their spacing, but also in their height position relative to the row of terminal blocks (3), **characterised in that** the holding device comprises holders (7) which ascend from the plane of the support rail (6) and which are fastened on an installation plate (1) or a support strip (13) to be variable in their spacing relative to the row of terminal blocks (3) and on which holding devices (8), in which the busbar (5) is held, are fastened to be displaceable in height.

2. Holding device according to claim 1, **characterised in that** the support rail (6) is also fastened on the installation plate (1).

3. Holding device according to claim 1, **characterised in that** slots (10), which extend transversely to the support rail (6) and in which the holders (7) are fastened by means of screws (12), are provided in the installation plate (1).

4. Holding device according to claim 1, **characterised in that** the support strips (13) are connected with the support rail (6) in shape-locking and/or force-locking manner.

5. Holding device according to claim 1, **characterised in that** support strips (13) arranged transversely to the longitudinal axis of the support rail (6) have slots (10) extending in the longitudinal axial direction thereof, wherein the holder (7) is held by screws (12) in two slots of the mutually opposite support strips (13).

6. Holding device according to claim 1, **characterised in that** the holding devices (8) can be fixed to the holders (7) by clamping screws (9).

7. Holding device according to claim 6, **characterised in that** the busbar (5) can be fixed in the holding devices (8) by the clamping screws (9).

8. Holding device according to claim 1, **characterised in that** the holder (7) has detent openings in which detent pins of the holding devices (8) can be detented.

## Revendications

1. Dispositif de fixation destiné à des barres collectrices de câbles blindés, comprenant des dispositifs de serrage (4) présents sur la barre collectrice (5), qui sont associés à une rangée de bornes en ligne (3) montée sur un rail porteur (6), la barre collectrice (5) et, par conséquent, les dispositifs de serrage (4) qui y sont fixés étant maintenus dans le dispositif de fixation, avec possibilité de modifier aussi bien leur écartement que leur hauteur vis-à-vis de la rangée de bornes en ligne (3), **caractérisé en ce que** le dispositif de fixation comprend des supports (7) qui dépassent du plan du rail porteur (6), qui sont fixés sur une plaque d'installation (1) ou sur une barrette porteuse (13), avec possibilité de modifier leur écartement par rapport à la rangée de bornes en ligne (3), et sur lesquels des dispositifs de maintien (8) sont montés, avec possibilité de coulissement en hauteur, dans lesquels la barre collectrice (5) est maintenue.

2. Dispositif de fixation selon la revendication 1, **caractérisé en ce que** le rail porteur (6) est, lui aussi, fixé sur la plaque d'installation (1).

3. Dispositif de fixation selon la revendication 1, **caractérisé en ce que** sont prévus, dans la plaque d'installation (1), des trous oblongs (10) qui s'étendent perpendiculairement au rail porteur (6), dans lesquels les supports (7) sont fixés au moyen de vis (12).

4. Dispositif de fixation selon la revendication 1, **caractérisé en ce que** les barrettes porteuses (13) sont reliées au rail porteur (6) par complémentarité de formes et/ou par force.

5. Dispositif de fixation selon la revendication 1, **caractérisé en ce que** les barrettes porteuses (13) situées perpendiculairement à l'axe longitudinal du rail porteur (6) présentent des perçages longitudinaux (10) qui s'étendent dans la direction de leur axe longitudinal, les supports (7) étant maintenus par des vis (12) dans deux perçages longitudinaux des barrettes porteuses (13) opposées.

6. Dispositif de fixation selon la revendication 1, **caractérisé en ce que** les dispositifs de maintien (8) sont susceptibles d'être fixés sur les supports (7) par des vis de blocage (9).

7. Dispositif de fixation selon la revendication 6, **caractérisé en ce que** les barres collectrices (5) sont susceptibles d'être fixées dans les dispositifs de maintien (8) par les vis de blocage (9).

8. Dispositif de fixation selon la revendication 1, **caractérisé en ce que** les supports (7) présentent des ouvertures d'enclenchement, dans lesquelles des doigts d'enclenchement des dispositifs de maintien (8) peuvent venir s'enclencher.
